# EUROPEAN PATENT APPLICATION

(11) **EP 1 657 927 A1**
(43) Date of publication of application: **17.05.2006**
(21) Application number: 04026960.7
(22) Date of filing: 12.11.2004
(51) Int. Cl.: H04N 7/18, G06T 7/00

(54) **Image-based movement tracking**

(71) Applicant: SAAB AB, 581 88 Linköping (SE)
(72) Inventor: Borg, Johan, 583 33 Linköping (SE); Isaksson, Folke, 582 42 Linköping (SE)
(74) Representative: Holmberg, Magnus

(57) **Abstract**

The invention relates to image-based movement tracking of a number of objects in a particular area. A number of image registration means repeatedly records data pertaining to multiple simultaneous representations of events occurring within the area. Specifically, at least one stereo-pair of cameras (101a, 101b) repeatedly record stereo-image data (D1', D1") based upon which a data processing unit (110) repeatedly determines a respective position for each of the objects. According to the invention, a first camera (101a) and a second camera (101b) in the stereo-pair are separated by a base distance. Moreover, the cameras (101a, 101b) are essentially parallel and directed towards the area, such that a first image plane of the first camera (101a) registers a portion of the area, which substantially overlaps a portion of the area registered by a second image plane of the second camera (101b).

## Description

### THE BACKGROUND OF THE INVENTION AND PRIOR ART

The present invention relates generally to image-based movement tracking in complex scenes. More particularly the invention relates to an arrangement according to the preamble of claim 1 and corresponding method according to the preamble of claim 13. The invention also relates to a computer program according to claim 24 and a computer readable medium according to claim 26.

Modern image processing technology has enabled sophisticated real-time extraction of data from complex scenes. For instance, different types of vehicles may be automatically discriminated and tracked based on images recorded by video cameras. The international patent application WO96/13023 describes a device for identification of vehicles at a control station, such as a road toll facility. Here, at least one video camera registers a vehicle profile in the light of a particular illumination device.

Also individuals may be automatically tracked by means of cameras associated with adequate image processing equipment. The document US, 6,359,647 discloses an automated camera handoff system, which is capable of tracking a target object between the fields of view of different cameras within a multi-camera surveillance system. Consequently, a second camera takes over the responsibility for generating images when the target object leaves the field of view of a first camera and is estimated to enter the field of view of the second camera.

In other applications, it may instead be relevant to register images of one and the same scene by means of more than one camera. Sports events constitute one such example, because here different view angles may be interesting depending upon the events of the game. Therefore, switching from a first to a second camera may be desired even though also the first camera registers a particular event. The international patent application WO03/056809 describes a system for real-time monitoring of athlete movements, such as soccer players running in a soccer field. This system automatically determines which camera of a plurality of cameras that is best positioned to carry out the filming of a certain event on the field. Thus, the system assists a producer responsible for a television recording/transmission of a soccer match, or similar game.

Nevertheless, in many sports, it may also be interesting to generate various types of statistics and systematic quantitative data compilations in respect of the activities undertaken by the individual sports participants. For example in games like soccer, football, basketball, volleyball, hockey and tennis, it may be desirable to determine the amount of court covered, the total distance run, the peak running speed, the average running speed, the time in possession of the ball, a spatial distribution of specific players relative to the playing field and/or relative to other players. The document US, 5,363,297 discloses an automated camera-based tracking system for producing such data records. Here, two cameras are preferably used, which are positioned roughly orthogonal to one another (for example a first camera, filming an overhead view of the field, and a second camera filming a side-view of the field). Namely thereby, the risk of shadowing and situations with occlusions/overlapping silhouettes is minimized.

However, in many cases, it is simply not possible or practical to use an overhead camera, such as in outdoor sports like soccer. Furthermore, an outdoor playing field may be relatively large and/or the light conditions may here be problematical. As a result, two orthogonally arranged side-view cameras would normally not be capable of providing the image resolution, or quality, necessary to track the individual players with a satisfying degree of accuracy. The resolution requirements can be relaxed substantially if each player and the ball are assigned specific identities via a manual operator interaction. Still, due to the large distances and possibly complicated light conditions, a system of this type is likely to lose track of one or more the players and/or the ball relatively quickly in an outdoor application. Of course, various kinds of independent telemetric systems involving transmitters/receivers placed on the players may be employed to aid the cameras. Nevertheless, such solutions in turn, are associated with other problems including inconveniences for the players, and are therefore not particularly desirable.

### SUMMARY OF THE INVENTION

It is therefore an object of the present invention to alleviate the problems above, and thus provide a reliable and efficient image-based solution for tracking the movements made by each of a number of objects in a given area.

According to one aspect of the invention this object is achieved by the arrangement as described initially, wherein at least one of the image registration means includes a stereo-pair of cameras in which a first camera is separated a base distance from a second camera. The first and second cameras are essentially parallel and directed towards the area, such that a first image plane of the first camera registers a portion of the area substantially overlapping a portion of the area registered by a second image plane of the second camera.

An important advantage attained by this design strategy is that a comparatively high resolution can be attained by means of a reasonable amount of resources. Moreover, if multiple stereo-pairs of cameras are employed, a reliable tracking may be accomplished even if the objects obscure one another during shorter time periods.

According to a preferred embodiment of this aspect of the invention, the data processing unit includes a stereo module, which is adapted to produce a stereo image based on data from a first image recorded by the first camera and data from a second image recorded by the second camera. It is presumed that both the first and second images are recorded at a particular point in time. The stereo module thereby combines information from the two images into a representation suitable for higher-level conclusions, such as the positions of a particular objects. Preferably, the stereo image represents estimates of time varying elevations over a stationary surface of the area.

According to another preferred embodiment of this aspect of the invention, the data processing unit includes a scene initialization module, which is adapted to generate an initial background model of the area based on data from the image registration means recorded in the absence of objects in the area. Hence, by means of the background model, moving objects, e.g. individuals and balls, may be discriminated from essentially stationary objects, e.g. the play field and various stands and platforms for spectators.

According to yet another preferred embodiment of this aspect of the invention, the stereo module is adapted to produce the stereo image by means of a procedure, which involves transforming one of the first and second images to match a representation of the other of the first and second images. Specifically, this transformation results in that, in the stereo image, each image point that is based on an image point which in the first image is estimated to represent a particular *segment of the surface* is projected onto the same image point as an image point in the second image which is estimated to represent the particular segment. Moreover, the transformation results in that, in the stereo image, image points in the first and second images which are estimated to represent objects *above the surface* are at least laterally translated with respect to one another. The degree of translation here depends on the objects' altitude relative to the surface. This representation is advantageous because it further facilitates the discrimination of the moving objects, e.g. the players and the ball.

According to still another preferred embodiment of this aspect of the invention, the data processing unit includes a first information extraction module adapted to determine an estimate of which image points that represent the surface. The initial background model serves as input data for this determination.

According to another preferred embodiment of this aspect of the invention, the data processing unit includes a density module, which is adapted to produce a density map based on the stereo image. The density map represents respective probability functions over candidate positions for the objects in the area. Hence, by studying the probability functions a position for each object may be estimated. Preferably, a second information extraction module in the data processing unit performs this is operation. The second module is adapted to discriminate positions of the objects based on the probability functions.

According to yet another preferred embodiment of this aspect of the invention, the first information extraction module is adapted to repeatedly (e.g. after each second video frame) determine an updated background model based on a previous background model and the discriminated positions of the objects. The first information extraction module is also adapted to repeatedly (e.g. after each second video frame) determine an updated estimate of which image points that represent the surface based on the updated background model. Such an updating is desirable because thereby a high tracking reliability is maintained. Normally, the light conditions and other environmental parameters which are essentially uncorrelated to the events occurring in the area change during over time. Therefore the background model must be updated in order to enable a continued correct discrimination of the moving objects.

According to other preferred embodiments of this aspect of the invention, the area is a sports field and the objects include players participating in a sports event, e.g. a ball game, which is conducted in the sports field. The objects may therefore also include at least one ball. Consequently, the players and the ball may be tracked during a game, and as a result, various types of statistics and systematic quantitative data compilations can be generated. For instance, the following parameters may be determined in respect of each player: an amount of court covered, total distance run, peak running time, average running time, time in possession of the ball, spatial distribution relative to the playing field and/or relative to other players.

According to still another preferred embodiment of this aspect of the invention, the data processing unit is adapted to generate, in real time, at least one data signal, which describes at least one type of statistics and/or systematic quantitative information pertaining to the number of objects. The at least one data signal is based on positions for the objects that have been determined during a time interval foregoing a present point in time. Thus, for instance, current statistics over the accomplishments of individual players in a ball game may be presented to a TV audience in live broadcasting, i.e. during an ongoing game.

According to another aspect of the invention, this object is achieved by the method described initially, wherein at least a part of the data is registered by means of a stereo-pair of images of the area. The image planes of these images are essentially parallel, such that a first image plane registers a portion of the area, which substantially overlaps a portion of the area registered by a second image plane. Moreover, the first and second image planes are separated a base distance from one another.

The advantages of this method, as well as the preferred embodiments thereof, are apparent from the discussion hereinabove with reference to the proposed arrangement.

According to another aspect of the invention this object is achieved by a computer program directly loadable into the internal memory of a digital computer, comprising software for controlling the method described above when said program is run on a computer.

According to yet another aspect of the invention this object is achieved by a computer readable medium, having a program recorded thereon, where the program is to make a computer perform the method described above.

Further advantages, advantageous features and applications of the present invention will be apparent from the following description.

### BRIEF DESCRIPTION OF THE DRAWINGS

The present invention is now to be explained more closely by means of preferred embodiments, which are disclosed as examples, and with reference to the attached drawings.
- Figure 1: shows a first example of how a number of image registration means may be positioned in relation to an area according to one embodiment of the invention,
- Figure 2: shows a second example of how a number of image registration means may be positioned in relation to an area according to one embodiment of the invention,
- Figure 3: illustrates schematically how images of a physical point are projected onto the image planes of a stereo-pair of cameras according to one embodiment of the invention,
- Figures 4a-b: illustrate, by means of an example, first and second images recorded by a stereo-pair of cameras according to one embodiment of the invention,
- Figure 5: illustrates how a stereo image is generated based on the first and second images of the figures 4a and 4b according to one embodiment of the invention,
- Figure 6: illustrates how a density image is generated based on the stereo image of the figure 5 according to one embodiment of the invention,
- Figure 7: shows a block diagram over an arrangement according to one embodiment of the invention, and
- Figure 8: shows a flow diagram over the general method according to the invention.

### DESCRIPTION OF PREFERRED EMBODIMENTS OF THE INVENTION

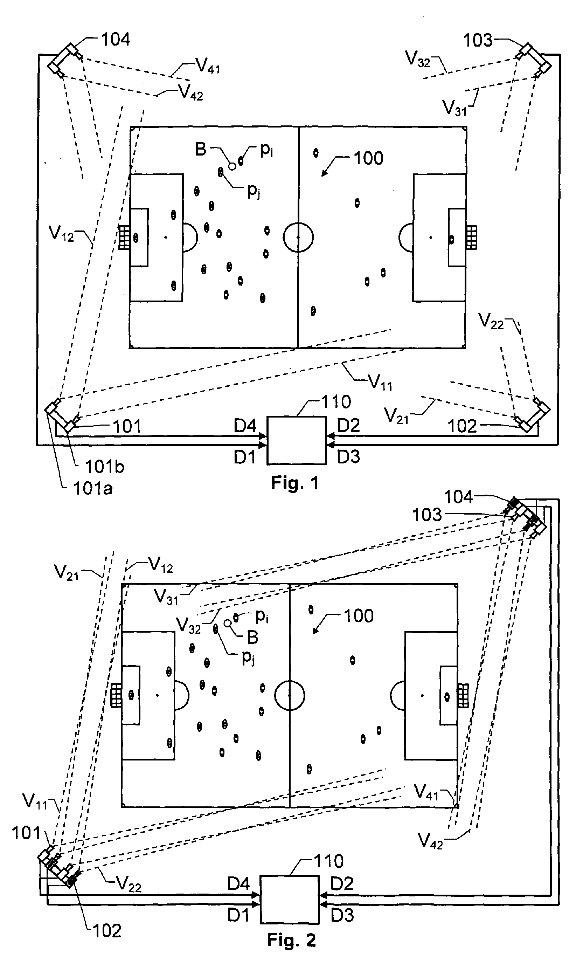

Figure 1 shows an area 100 in the form of a soccer field around which a number of image registration means (preferably including video cameras) are arranged according to one embodiment of the invention. Specifically, in this case eight cameras are used, which organized in four stereo-pairs 101, 102, 103 and 104 respectively. A first stereo pair 101 includes a first camera 101a and a second camera 101 b, and is positioned in proximity to a first corner of the area 100. Provided that the area 100 has the size of a normal soccer field (i.e. a length of approximately 90-120 m and a width of approximately 45-90 m), each stereo-pair of cameras 101, 102, 103, 104 is preferably placed about 30 m from the area and about 25 m above the ground. Moreover, according to the invention, the cameras of a particular stereo-pair, say 101a and 101 b, are separated from one another a particular distance. This separation distance is generally referred to as the base distance, and is preferably about 10 m.

The first and second cameras 101a and 101b are essentially parallel and directed in an angle towards the area 100, such that they register substantially overlapping portions of the area 100. As can be seen in the figure 1, the first camera 101 a in the first stereo-pair has a first field of view V₁₁ covering approximately half the area 100, and the second camera 101b in the first stereo-pair has a second field of view V₁₂ covering almost the same half of the area 100. However, the particular angles to each object pᵢ, pⱼ and B in the area 100 is slightly different in an image registered by the second camera 101b than an in image registered by the first camera 101 a. Correspondingly, the individual cameras in the stereo-pairs of the second, third and fourth image registration means 102, 103 and 104 have the fields of view V₂₁, V₂₂; V₃₁, V₃₂ and V₄₁, V₄₂ respectively as schematically illustrated in the figure 1. In the configuration shown here, a desired overlap of the fields of view V₁₁, V₁₂, V₂₁, V₂₂, V₃₁, V₃₂, V₄₁ and V₄₂ may be accomplished if the cameras are conventional TV-cameras.

The image registration means 101, 102, 103 and 104 repeatedly and synchronously record image data D1, D2, D3 and D4 respectively of events that occur within the area 100. Thus, the data D1, D2, D3 and D4 constitute multiple simultaneous representations of these events. The data D1, D2, D3 and D4 is sent to a data processing unit 110, which is adapted to repeatedly determine a respective position for each of the objects pᵢ, pⱼ, and B. For example, a first set of objects pᵢ may encompass the players of a home team, a second set of objects pⱼ may encompass the players of a visiting team and a third object B may be a ball. In any case, according to the invention, each object pᵢ, pⱼ, and B can be automatically tracked based on the data D1, D2, D3 and D4.

In order to relax the image resolution requirements on the output data D1, D2, D3 and D4 (i.e. essentially the amount of data) from the image registration means 101, 102, 103 and 104, a unique identity is preferably manually assigned to each object pᵢ, pⱼ and B, for instance before starting the match. This means that it is not necessary that system is capable of discriminating the numbers (or other characterizing features) of the players' clothing (or appearance). Instead, it is sufficient if the system can maintain a consistent tracking of each object. Theoretically, an image resolution in the order of one pixel per object is enough to accomplish such a tracking. However in practice, a higher resolution is often desired for robustness reasons. Of course, the assignment of identities may also need to be updated occasionally during the course of the game, e.g. after so-called pile ups, in connection with breaks and when one or more players are substituted by one or more other players.

Figure 2 shows another example of how a number of image registration means 101, 102, 103 and 104 may be positioned in relation to an area 100 according to one embodiment of the invention. Here, first and second image registration means (typically including video cameras) 101 and 102 respectively are placed in proximity to a first corner of the area 100, such that the fields of view V₁₁, V₁₂ and V₂₁, V₂₂ of the two stereo-pairs of cameras overlap in a fan-like manner. Since each camera here has to cover a somewhat larger part of the area 100 than in the above-described first example, it is preferred to equip the cameras with slightly more wide angled lenses. Nevertheless, in order to ensure sufficient area coverage and to attain the same tracking reliability as in the first example, a third and a fourth image registration means 103 and 104 respectively are placed in proximity to a corner of the area 100 which is opposite to the first corner. The fields of view V₃₁, V₃₂ and V₄₁, V₄₂ of these two stereo-pairs also overlap in a fan-like manner as shown in the figure 2. Preferably, the image registration means in each group of cameras 101, 102 and 103, 104 respectively are arranged with interleaved stereo-pairs (as shown in the figure 2), so that one of the cameras in a first pair is placed between one of the cameras in a second pair. Moreover, the different stereo-pairs in each group have slightly different angles towards the area 100 (such that the fan-like pattern of view fields is attained).

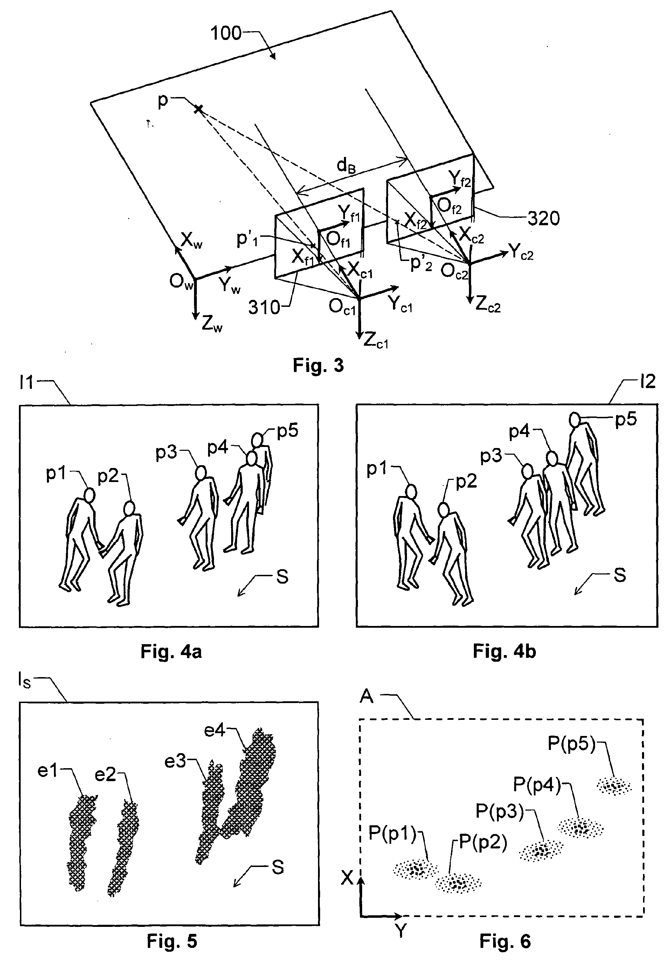

Figure 3 illustrates schematically how images of a physical point p are projected onto the image planes 310 and 320 of a stereo-pair of cameras according to one embodiment of the invention. This is an example of a canonical camera configuration, wherein both cameras have the same focal length, have image planes and optical axes which are parallel to one another, and the image planes are shifted a base distance d_{B} relative to one another. The base distance d_{B} is relatively short, such that the angle between the cameras and the recorded objects is comparatively small and that therefore the first image plane 310 registers a portion of the area 100 which substantially overlaps a portion of the area 100 registered by the second image plane 320. This means that a physical point p in the area 100, which is located where it can be seen by both cameras, is projected onto different image points p'₁ and p'₂ in the first and second image planes 310 and 320 respectively. If we presume that the point p has certain physical coordinates in a world coordinate system X_{W}, Y_{W}, Z_{W} relative to an origin O_{W}, it may be projected onto a first image point p'₁ in the first image plane 310 having coordinates expressed in relation to a first 2D-coordinate system X_{f1}, Y_{f1}. Similarly, the point p is projected onto a second image point p'₂ in the second image plane 320 having coordinates expressed in relation to a second 2D-coordinate system X_{f2}, Y_{f2}. The first image plane 310, in turn, has a first focal point O_{c1} in a coordinate system X_{c1}, Y_{c1}, Z_{c1}. Correspondingly; the second image plane 320 has a second focal point O_{c2} in a coordinate system X_{c2}, Y_{c2}, Z_{c2}. In the illustrated canonical configuration, the base distance d_{B} represents a shift exclusively along one coordinate axis Y_{c1} and Y_{c2} respectively of these coordinate systems.

Figure 4a shows an example of a first image I1 which may be registered by a first image plane of a stereo-pair of images, such as 310 in the figure 3 described above. The first image I1 includes five different individuals p1, p2, p3, p4 and p5 located relatively close to each other on a surface S, such as a soccer field or similar. It can be noted that a fifth individual p5 is here almost completely obscured by a fourth individual p4.

Figure 4b shows an example of a second image 12, which for illustrative purposes here represents a slightly transformed image of an image registered by a second image plane of a stereo-pair of images, such as 320 in the figure 3 described above. The transformation shown in the second image I2 relative to the actual image data recorded in the image plane 320 is linear and performed such that all image points estimated to represent the surface S are projected onto the same coordinates X_{f1}, Y_{f1} and X_{f2}, Y_{f2} in both the images I1 and I2 (i.e. X_{f1} = X_{f1} and Y_{f1} = Y_{f1}). However, since the images I1 and I2 are taken from slightly different angles, image points estimated to represent objects above the surface are at least laterally translated in the second image I2 in relation to the first image 11 due to this transformation. In other words, the individuals p1, p2, p3, p4 and p5 appear to "lean" differently in the images I1 and I2, however their feet are placed on identical spots. This is true provided that the field in which the individuals are located is selected as the transformation plane. However, according to the invention, other transformation planes may also be selected, e.g. vertically through each individual.

As can be seen in the second image I2, which is recorded at the same point in time as the first image I1, the fifth individual p5 is much less obscured by the fourth individual p4 than in the first image I1. This vouches for good tracking possibilities. Provided that the stereo-pairs of cameras are arranged properly in relation to one another and in relation to the area 100, this kind of separation normally arises, i.e. that one or more occlusions in the first image I1 are resolved in the second image I2, and vice versa.

Preferably, according to one embodiment of the invention, the transformation described with reference to the figure 4b is actually, performed in connection with generation of a stereo image I_{S} as will be described below with reference to figure 5b.

The stereo image I_{S} is produced based on data from a first image, e.g. I1, recorded by a first camera and data from a second image, e.g. I2, recorded by a second camera in a stereo-pair. The first and second images I1 and I2 are recorded at a particular point in time.

The stereo image I_{S} represents estimates e1, e2, e3 and e4 of image elements that describe objects which are not part of the stationary surface S and whose position in the area 100 vary over time (i.e. moving objects). Specifically, the production of the stereo image I_{S} may involve transforming one of the first and second images I1 and I2 to match a representation of the other of the first and second images I1 and I2, such that in the stereo image I_{S}, each image point that is based on an image point which in the first image I1 is estimated to represent a particular segment of the surface S is projected onto the same image point as an image point in the second image I2 which is estimated to represent the particular segment. As a further result of this transformation, image points in the first and second images I1 and I2 which are estimated to represent objects above the surface S are at least laterally translated with respect to one another. Here, the degree of translation depends on the objects' altitude relative to the surface S. Consequently, vertically oriented objects having an essentially longitudinal extension (such as upright standing soccer players) will approximately be represented by inverted-cone shapes in the stereo image I_{S}.

In order to render it possible to accurately estimate which image points that represent the surface S a background model is generated according to a preferred embodiment of the invention. An initial background model of the area 100 is based on data D1, D2, D3 and D4 from the image registration means 101, 102, 103 and 104, which is recorded in the absence of objects pᵢ, pⱼ and B in the area 100. Hence, a first estimate of which image points that represent the surface S is based on the initial background model. After that, an updated background model is repeatedly determined based on a previous background model in combination with discriminated positions of the objects pᵢ, pⱼ and B. Based on the updated background model, in turn, an updated estimate of which image points that represent the surface S is determined.

Figure 6 illustrates how a density image A is generated based on the stereo image I_{S} of the figure 5 according to one embodiment of the invention. The density map A represents respective probability functions P(p1), P(p2), P(p3), P(p4) and P(p5) over candidate positions for the objects p1, p2, p3, p4 and p5 in the area 100. The probability functions P(p1), P(p2), P(p3), P(p4) and P(p5), in turn, are derived from the elevation estimates e1, e2, e3 and e4 of the stereo image I_{S}. According to one embodiment of the invention, positions are discriminated for each object p1, p2, p3, p4 and p5 in the area A based on the probability functions P(p1), P(p2), P(p3), P(p4) and P(p5).

Of course, in the general case, only a fraction of the total number of objects may be visible from a particular stereo-pair of cameras. Therefore, information gained from two or more image registering means may have to be aggregated in the data processing unit 110 (see figure 1) in order to establish the positions for all objects located in the area 100.

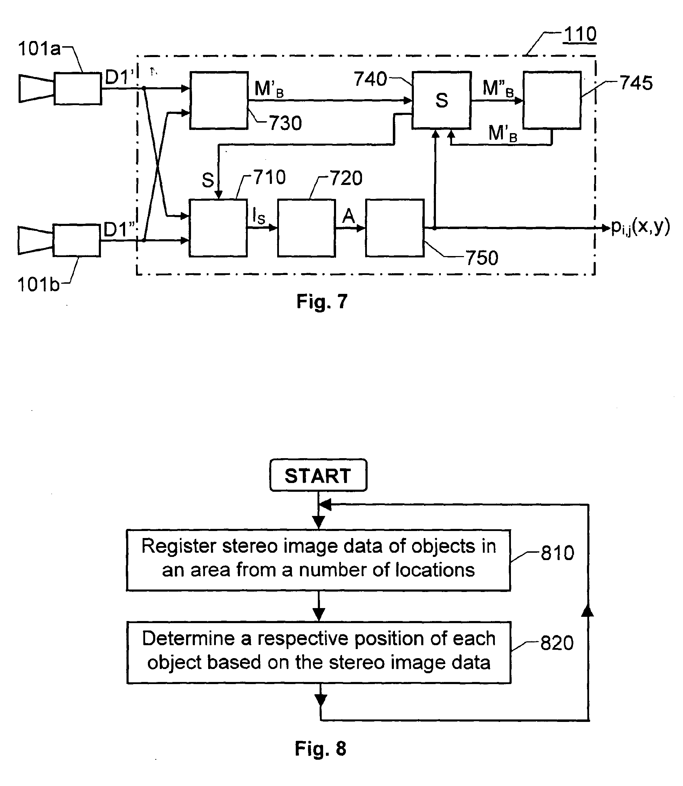

Figure 7 shows a block diagram over an arrangement according to one embodiment of the invention, which is adapted to track the movements made by each of a number of objects in a particular area. The illustrated arrangement includes image registration means including a stereo-pair of cameras 101a and 101 b, and a data processing unit 110. For reasons of a clear presentation, the figure 7 only shows a single image data processing chain. However, according to the invention, the data processing unit 110 is preferably adapted to process image data from a plurality of stereo-image pairs, for instance as indicated in the figure 1 and 2.

A first camera 101 a in the image registration means repeatedly records data D1' pertaining to representations of events occurring within the area, and second camera 101 b in the image registration means simultaneously there with also records data D1" pertaining to these events, however from a slightly different angle (which is given by the base distance to the first camera 101a and the distances to any registered objects). In any case, the first and second cameras 101a and 101b are essentially parallel and directed towards the area, such that a first image plane of the first camera 101a registers a portion of the area which substantially overlaps a portion of the area registered by a second image plane of the second camera 101 b.

The data processing unit 110 receives the data D1' and D1" from the cameras 101a and 101 b respectively. Specifically, according to a preferred embodiment of the invention, a scene initialization module 730 in the data processing unit 110 receives data D1' and D1" recorded in the absence of objects in the area. Based on this data D1' and D1", the scene initialization module 730 generates an initial background model M'_{B} of the area, which is sent to a storage means 745, either directly or via a first information extraction module 740.

In steady-state operation of the arrangement, the data D1' and D1" from the cameras 101a and 101b are also sent to a stereo module 710 in the data processing unit 110. The stereo module 710 produces a stereo image I_{S} based on the data D1' and D1". As mentioned previously, the stereo image I_{S} represents estimates of time varying elevations over a stationary surface S of the area.

The stereo module 710 produces the stereo image I_{S} by means of a procedure, which involves transforming one of the first and second images to match a representation of the other of the first and second images, such that in the stereo image I_{S} each image point that is based on an image point which in the first image is estimated to represent a particular segment of the surface S is projected onto the same image point as an image point in the second image which estimated to represent the particular segment. Moreover, due to the transformation, image points in the first and second images which are estimated to represent objects above the surface S are at least laterally translated with respect to one another, where the degree of translation depends on the objects' altitude relative to the surface S.

In steady-state operation of the arrangement, the first information extraction module 740 repeatedly determines an estimate of which image points that represent the surface S based on a previous background model stored in the storage means 745. Hence, a first updated background model M"_{B} is based on the initial background model M'_{B}. Preferably, the first information extraction module 740 repeatedly determines an updated background model M"_{B} based on a previous background model M'_{B} (stored in the storage module 745) and the discriminated positions p_{i,j}(x, y) of the moving objects. The module 740 also repeatedly determines an updated estimate of which image points that represent the surface S based on the updated background model M"_{B}.

A density module 720 in the data processing unit 110 produces a density map A based on the stereo image I_{S}. As described above with reference to the figure 5, the density map A represents probability functions over candidate positions for moving objects in the area. A second information extraction module 750 in the data processing unit 110 discriminates positions p_{i,j}(x, y) of the moving objects based on these probability functions.

Preferably, the data processing unit 110 is also adapted to accumulate the discriminated positions p_{i,j}(x, y) of the moving objects over time. Namely, thereby the unit 110 can generate various data signals, which describe different types of statistics and/or systematic quantitative information pertaining to the moving of objects. It is further preferable if the data processing unit 110 has such processing capacity that these data signals can be generated in real time. Each data signal is based on positions for the moving objects that have been determined during a time interval foregoing a present point in time. Thereby, for instance, current (and continuously updated) statistics over the accomplishments of individual players in a ball game may be presented to a TV audience in live broadcasting, i.e. during an ongoing game.

In order to sum up, the general method for tracking the movements of a number of objects in a particular area according to the invention will now be described with reference to figure 8.

A first step 810 registers stereo image data pertaining to multiple simultaneous representations of events occurring within the area. Preferably, this data is registered from more than one location, for instance two or four as illustrated in the figures 1 and 2 respectively. A second step 820 determines a respective position for each of the objects based on the registered stereo image data. The procedure then loops back to the step 810 for registering updated stereo image data.

In order to obtain a reliable tracking of sports events, and thus a high data quality, the stereo image data should be updated relatively often, say in the order of 25-30 times per second.

The process steps described with reference to the figure 8 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code; object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. An arrangement for tracking the movements made by each of a number of objects (pᵢ, pⱼ, B) in a particular area (100), the arrangement comprising:
a number of image registration means (101, 102, 103, 104) adapted to repeatedly record data (D1, D2, D3, D4) pertaining to multiple simultaneous representations of events occurring within the area (100), and
a data processing unit (110) adapted to receive the data (D1, D2, D3, D4) recorded by the image registration means (101, 102, 103, 104) and based thereon repeatedly determine a respective position (p_{i,j}(x, y)) for each of the objects (pᵢ, pⱼ, B),
**characterized in that**
at least one of the image registration means (101, 102, 103, 104) comprises a stereo-pair of cameras in which a first camera (101a) is separated a base distance (d_{B}) from a second camera (101b), and the first and second cameras are essentially parallel and directed towards the area (100), such that a first image plane (310) of the first camera (101a) registers a portion of the area (100) substantially overlapping a portion of the area (100) registered by a second image plane (320) of the second camera (101b).

2. An arrangement according to claim 1, **characterized in that** the data processing unit (110) comprises a stereo module (710) adapted to produce a stereo image (I_{S}) based on data (D1') from a first image (I1) recorded by the first camera (101a) and data (D1") from a second image (I2) recorded by the second camera (101b), and the first and second images (I1, I2) are recorded at a particular point in time.

3. An arrangement according to claim 2, **characterized in that** the stereo image (I_{S}) represents estimates (e1, e2, e3, e4) of time varying elevations over a stationary surface (S) of the area (100).

4. An arrangement according to claim 3, **characterized in that** the data processing unit (110) comprises a scene initialization module (730) adapted to generate an initial background model (M'_{B}) of the area (100) based on data (D1, D2, D3, D4) from the image registration means (101, 102, 103, 104) recorded in the absence of objects (pᵢ, pⱼ, B) in the area (100).

5. An arrangement according to claim 4, **characterized in that** the stereo module (710) is adapted to produce the stereo image (I_{S}) by means of a procedure which involves transforming one of the first and second images (I1, I2) to match a representation of the other of the first and second images (I1, I2), such that in the stereo image (I_{S}):
each image point that is based on an image point which in the first image (I1) is estimated to represent a particular segment of the surface (S) is projected onto the same image point as an image point in the second image (I2) which estimated to represent the particular segment, and
image points in the first and second images (I1, I2) which are estimated to represent objects above the surface (S) are at least laterally translated with respect to one another, the degree of translation depending on the objects' altitude relative to the surface (S).

6. An arrangement according to claim 5, **characterized in that** the data processing unit (110) comprises a first information extraction module (740) adapted to determine an estimate of which image points that represent the surface (S) based on the initial background model (M'_{B}).

7. An arrangement according to any one of the preceding claims, **characterized in that** the data processing unit (110) comprises a density module (720) adapted to produce a density map (A) based on the stereo image (I_{S}), the density map (A) representing respective probability functions (P(p1), P(p2), P(p3), P(p4), P(p5)) over candidate positions (x, y) for the objects (pᵢ, pⱼ) in the area (100).

8. An arrangement according to claim 7, **characterized in that** the data processing unit (110) comprises a second information extraction module (750) adapted to discriminate positions (p_{i,j}(x, y)) of the objects (pᵢ, pⱼ) based on the probability functions (P(p1), P(p2), P(p3), P(p4), P(p5)).

9. An arrangement according to claim 8, **characterized in that** the first information extraction module (740) is adapted to repeatedly
determine an updated background model (M"_{B}) based on a previous background model (M'_{B}) and the discriminated positions (p_{i,j}(x, y)) of the objects (pᵢ, pⱼ, B), and
determine an updated estimate of which image points that represent the surface (S) based on the updated background model (M"_{B}).

10. An arrangement according to any one of the preceding claims, **characterized in that** the area (100) is a sports field and the objects (pᵢ, pⱼ, B) include players participating in a sports event conducted in the sports field.

11. An arrangement according to claim 10, **characterized in that** the sports event is a ball game involving the use of at least one ball (B), and the objects (pᵢ, pⱼ, B) further include the at least one ball (B).

12. An arrangement according to any one of the preceding claims, **characterized in that** the data processing unit (110) is adapted to generate, in real time, at least one data signal describing at least one type of statistics and/or systematic quantitative information pertaining to the number of objects (pᵢ, pⱼ, B), and the at least one data signal is based on positions (p_{i,j}(x, y)) for the number of objects (pᵢ, pⱼ, B) determined during a time interval foregoing a present point in time.

13. A method of tracking the movements made by each of a number of objects (pᵢ, pⱼ, B) in a particular area (100), the method comprising:
repeatedly registering data (D1, D2, D3, D4) pertaining to multiple simultaneous representations of events occurring within the area (100), and
repeatedly determining a respective position (p_{i,j}(x, y)) for each of the objects (pᵢ, pⱼ, B) based on the registered data (D1, D2, D3, D4), **characterized by**
registering at least a part of the data (D1, D2, D3, D4) by means of a stereo-pair of images of the area (100) whose image planes (310, 320) are essentially parallel, such that a first image plane (310) registers a portion of the area (100) which substantially overlaps a portion of the area (100) registered by a second image plane (320), and the first and second image planes (310, 320) are separated a base distance (d_{B}) from one another.

14. A method according to claim 13, **characterized by** producing a stereo image (I_{S}) based on data (D1') from a first image (I1) recorded by the first camera (101a) and data (D1") from a second image (I2) recorded by the second camera (101 b), and the first and second images (I1, I2) are recorded at a particular point in time.

15. A method according to claim 14, **characterized by** the stereo image (I_{S}) representing estimates (e1, e2, e3, e4) of time varying elevations over a stationary surface (S) of the area (100).

16. A method according to claim 15, **characterized by** generating an initial background model (M'_{B}) of the area (100) based on data (D1, D2, D3, D4) from the image registration means (101, 102, 103, 104) recorded in the absence of objects (pᵢ, pⱼ, B) in the area (100).

17. A method according to claim 16, **characterized by** the producing of the stereo image (I_{S}) involving transforming one of the first and second images (I1, I2) to match a representation of the other of the first and second images (I1; I2), such that in the stereo image (I_{S}):
each image point that is based on an image point which in the first image (11) is estimated to represent a particular segment of the surface (S) is projected onto the same image point as an image point in the second image (12) which is estimated to represent the particular segment, and
image points in the first and second images (I1, I2) which are estimated to represent objects above the surface (S) are at least laterally translated with respect to one another, the degree of translation depending on the objects' altitude relative to the surface (S).

18. A method according to claim 17, **characterized by** determining an estimate of which image points that represent the surface (S) based on the initial background model (M'_{B}).

19. A method according to any one of the claims 13 - 18, **characterized by** producing a density map (A) based on the stereo image (I_{S}), the density map representing respective probability functions (P(p1), P(p2), P(p3), P(p4), P(p5)) over candidate positions (x, y) for the objects (pᵢ, pⱼ) in the area (100).

20. A method according to claim 19, **characterized by** discriminating positions (p_{i,j}(x, y)) of the objects (pᵢ, pⱼ) based on the probability functions (P(p1), P(p2), P(p3), P(p4), P(p5)).

21. A method according to claim 20, **characterized by** comprising repeatedly
determining an updated background model (M"_{B}) based on a previous background model (M'_{B}) and the discriminated positions (p_{i,j}(x, y)) of the objects (pᵢ, pⱼ, B), and
determining an updated estimate of which image points that represent the surface (S) based on the updated background model (M"_{B}).

22. A method according to any one of the claims 13 - 21, **characterized by** the area (100) being a sports field and the objects (pᵢ, pⱼ, B) include players participating in a sports event conducted in the sports field.

23. A method according to claim 22, **characterized by** the sports event being a ball game involving the use of at least one ball (B), and the objects (pᵢ, pⱼ, B) include the at least one ball (B).

24. A method according to any one of the claims 13 - 23, **characterized by** generating, in real time, at least one data signal describing at least one type of statistics and/or systematic quantitative information pertaining to the number of objects (pᵢ, pⱼ, B), the at least one data signal being based on positions (p_{i,j}(x, y)) for the number of objects (pᵢ, pⱼ, B) determined during a time interval foregoing a present point in time.

25. A computer program directly loadable into the internal memory of a digital computer, comprising software for accomplishing the steps of any of the claims 13 - 24 when said program is run on a computer.

26. A computer readable medium (560), having a program recorded thereon, where the program is to make a computer accomplish the steps of any of the claims 13 - 24.
